**Europäisches Patentamt**

**European Patent Office**

**Office européen des brevets**

(19)

(11) Veröffentlichungsnummer : **0 437 787 B1**

(12) # EUROPÄISCHE PATENTSCHRIFT

(45) Veröffentlichungstag der Patentschrift :
**03.11.93 Patentblatt 93/44**

(51) Int. Cl.$^5$: **C08G 18/76,** C08G 18/66,
// (C08G18/76, 18:66, 101:00)

(21) Anmeldenummer : **90124859.1**

(22) Anmeldetag : **20.12.90**

(54) **Verfahren zur Herstellung von offenzelligen, kaltverformbaren Polyurethan-Hartschaumstoffen und deren Verwendung zur Herstellung von Autohimmeln.**

(30) Priorität : **18.01.90 DE 4001249**

(43) Veröffentlichungstag der Anmeldung :
**24.07.91 Patentblatt 91/30**

(45) Bekanntmachung des Hinweises auf die
Patenterteilung :
**03.11.93 Patentblatt 93/44**

(84) Benannte Vertragsstaaten :
**BE DE ES FR GB IT SE**

(56) Entgegenhaltungen :
**EP-A- 0 118 876**
**EP-A- 0 294 110**
**EP-A- 0 339 369**
**US-A- 4 575 520**

(73) Patentinhaber : **BAYER AG**
**D-51368 Leverkusen (DE)**

(72) Erfinder : **König, Eberhard, Dr.**
**Arthur-Hantzsch-Strasse 50**
**W-5000 Koeln 80 (DE)**
Erfinder : **Weber, Christian, Dr.**
**Paul-Klee-Strasse 68 A**
**W-5090 Leverkusen (DE)**

## Beschreibung

Die vorliegende Erfindung betrifft kaltverformbare, offenzellige Polyurethan-Hartschaumstoffe, die z.B. nach der Sandwich-Baumethode zusammen mit Glasvliesen, Dekor- und Abdeckfolien zu Automobilinnenverkleidungen, insbesondere Autohimmeln, verarbeitet werden.

Der Begriff "kaltverformbar" besagt, daß die Schaumstoffplatte vor dem Formgebungsprozeß nicht aufgewärmt wird, sondern bei Raumtemperatur in das aufgeheizte Werkzeug gelegt und unmittelbar darauf verformt wird. Die Aufheizwirkung, die im Moment des Verformens vom Werkzeug auf den Schaumstoff ausgeht, ist vernachlässigbar gering, da der Schaumstoff beidseitig von je einem Glasvlies und einer Deckschicht sowie dem auf diesen Flächengebilden befindlichen Klebstoff Sandwich-artig umhüllt ist und somit vom heißen Werkzeug (130°C) während des Schließvorganges abgeschirmt ist.

Polyurethan-Hartschaumstoffe, die vor ihrer endgültigen Formgebung aufgeheizt werden, sind bekannt und z.B. in der DE-OS 2 607 380 sowie in der DE-OS 3 610 961 beschrieben.

Aus der EP-A-0 118 876 sind weiche bis halbharte Polyurethan-Schaumstoffe bekannt geworden, die sich sowohl thermoplastisch als auch kalt verformen lassen. Letzteres verwundert nicht, da diese Schaumstoffe sehr weich und flexibel sind. Letztere Eigenschaft folgt unmittelbar aus dem mitgeteilten Rezepturaufbau, wo für 100 Gew.-Tle. Polyolformulierung nur 50 - 100 Gew.-Tle. MDI eingesetzt werden.

Wegen ihrer Weichheit lassen sich diese Schaumstoffe nicht ohne weiteres, d.h. nur mit Glasvliesen, Deckschichten und den dünn aufgetragenen Klebstoff-Filmen zu Autohimmeln verarbeiten. Beim Öffnen des heißen Werkzeuges ist der Verbund aus Schaumstoff und den angeklebten Stütz- und Dekorschichten insgesamt so weich, daß eine beschädigungsfreie Entnahme aus dem Werkzeug nicht möglich ist. Eine teilautomatisierte Produktion zur Herstellung einiger Tausend Autohimmel pro Tag läßt sich damit z.B. nicht aufbauen. Diesen Nachteil hat man aber, wie der obigen Patentschrift zu entnehmen ist, durch Umhüllen des Schaumstoffkerns mit ungesättigten Polyester-Harz-Prepeg-Matten zu kompensieren versucht, indem man die mangelhafte Stützfunktion des Schaumstoffes durch eine härtere Hüllenkonstruktion aufgefangen hat. Bekanntlich können aber UP-Harz-Preßteile physiologisch/ökologische Probleme infolge Abdampfens von nicht umgesetztem Styrol ergeben.

Ein weiterer Nachteil der genannten Schaumstoffe liegt in ihrem guten Rückstellvermögen, Die Schaumstoffe sind derart elastisch, daß ein einmal durchgeführter Präge- oder Preßvorgang seine Wirkung weitgehend verliert; der zusammengedrückte Schaumstoff stellt sich wieder auf. Dies ist aus dekorativen und konstruktiven Gründen negativ, weil z.B. ein zusammengepreßter Rand eines Autohimmels seinen engen Querschnitt behalten muß, um in die vorgesehene enge Lücke der Säulenverkleidung zu passen.

Es bestand daher die Aufgabe, einen Polyurethan-Hartschaumstoff mit folgenden Merkmalen herzustellen:

- gute Kaltverformbarkeit
- Stützfunktion
- geringes Raumgewicht von ca. 23 - 30 kg/m$^3$
- gute Kohäsion

Diese Aufgabe konnte überraschenderweise durch Umsetzung eines speziellen Polyisocyanats mit einer speziellen Polyolmischung gelöst werden.

Gegenstand der Erfindung ist somit ein Verfahren zur Herstellung von offenzelligen, kaltverformbaren Polyurethan-Hartschaumstoffen durch Umsetzung von

a)    Polyisocyanaten mit
b)    einer Polyol-Komponente aus Verbindungen mit mindestens zwei Hydroxylgruppen vom Molekulargewicht 187 - 10.000, Kettenverlangerungs- und Vernetzungsmitteln mit mindestens zwei Hydroxylgruppen vom Molekulargewicht 32 - 186,
      Wasser als Treibmittel, tert.-Aminkatalysatoren und Silicon-Schaumstabilisatoren,
dadurch gekennzeichnet, daß
- als Komponente a) ein Gemisch aus Diphenylmethandiisocyanaten und Polyphenylpolymethylenpolyisocyanaten, bestehend aus
1.)    70-90 Gew.-% Diphenylmethan-diisocyanaten, wovon
       12-30 Gew.-%, vorzugsweise 15-25 Gew.-%, 2,4'-Diphenylmethandiisocyanat darstellen, und
2.)    10-30 Gew.-% Polyphenyl-polymethylenpolyisocyanaten
       und
- als Komponente b) eine Mischung aus
1.)    50-70 Gew.-% an di- und trifunktionellen, Hydroxylgruppenaufweisenden Polyethern einer OH-Zahl von 28-600 (entsprechend einem Molekulargewicht von 187 - 6.000), und
2.)    20-35 Gew.-% eines difunktionellen, Hydroxylgruppe aufweisenden Phthalsäurepolyesters einer OH-Zahl von 150-440 (entsprechend einem Molekulargewicht von 254-747)

3.)   2-10 Gew.-% Glyzerin

4.)   3,5-7 Gew.-% Wasser

5.)   0,3-1 Gew.-% eines einbaufähigen tert. Amin- Katalysators und gegebenenfalls

6.)   0,1-2 Gew.-% eines Silikon-Schaumstabilisators

verwendet und die Polyolkomponente b) mit der Isocyanatkomponente a) im Gew.-Verhältnis 100:170-200 vermischt und umgesetzt wird.

Gegenstand der Erfindung ist ferner die Verwendung der offenzelligen, kaltverformbaren Hartschaumstoffe als Autohimmel,

Für Herstellung der erfindungsgemäßen Schaumstoffe werden als Mischung b) beispielsweise folgende Einzelkomponenten eingesetzt:

1a)   Difunktionelle Polyether, die durch Umsetzung von Ethylenoxid und/oder Propylenoxid mit Glykolen, z.B. Ethylen-, Diethylen-, 1,2- oder 1,3-Propylenglykol, Butandiol-1,4 u.a., zugänglich sind. Bevorzugt sind Polypropylenoxide und/oder Polyethylenoxide im OH-Zahlbereich 150-500 (entsprechend einem Molekulargewicht von 224-747). Diese kurzkettigen Polyether werden in der Regel in Mengen von 0 - 16 Gew.-%, bezogen auf Polyolmischung b) eingesetzt.

1b)   Trifunktionelle Polyether, die durch Umsetzung von Ethylenoxid bzw. Propylenoxid mit 3-wertigen Alkoholen, z.B. Glyzerin, Trimethylolpropan u.a. zuganglich sind. Diese Polyether weisen in der Regel eine OH-Zahl von 28-600 (entsprechend einem Molekulargewicht von 280-6.000) auf.

Bevorzugt ist die Mischung aus 25-35 Gew.-%, bezogen auf die Polyolmischung b), eines kurzkettigen Polypropylenoxid-TMP-Polyethers im OH-Zahlbereich 500-600 mit 20-35 Gew.-%, bezogen auf die Polyolmischung b), eines langkettigen Poly(propylen/ethylenoxid)-TMP-Polyethers im OH-Zahlbereich 28-34. Unter zuletzt genannte Polyether fallen auf die füllstoffhaltigen Polyether, die ca. 20 Gew.-% eines festen Styrol-Acrylnitril-Copolymerisates gepfropft oder eines festen Umsetzungsproduktes aus TDI und Hydrazin dispergiert enthalten.

2.)   Difunktionelle Phthalsäurepolyester im OH-Zahlbereich von 150-440, die durch Veresterung von Phthalsäureanhydrid mit Ethylen-, Propylen-, Diethylenglykol u.a. zugänglich sind. Bevorzugt ist die Verwendung von 20-30 Gew.-%, bezogen auf die Polyolmischung b), eines solchen Esters mit Diethylenglykol und Ethylenoxid der OH-Zahl 290 (entsprechend einem Molekulargewicht von 386).

3.)   Als Zellregulierungsmittel werden 2-10 Gew.-%, bezogen auf die Polyolmischung b), bevorzugt 4-6 Gew.-% Glyzerin, eingesetzt. Dieser 3-wertige Alkohol hat nicht die Aufgabe eines Verzweigungsmittels, sondern fördert überraschenderweise die Offenzelligkeit des erfindungsgemäßen Schaumstoffes. Analoge Verzweigungsmittel, z.B. Tri-methylolpropan, erfüllen diese Aufgabe nicht.

4.)   Als Treibmittel wird Wasser in Mengen von 3,5-7 Gew.-%, bezogen auf die Polyolmischung b), bevorzugt 3,5-6 Gew.-%, eingesetzt.

5.)   Als Silicon-Schaumstabilisatoren werden solche an sich bekannter Art verwendet; vorzugsweise werden solche mit rel. kurzem Polyetherrest und längerem Silikonrest, z.B. Polyurax® SR 271 (BP Chemicals), in Mengen von 0,1-2,0 Gew.-%, bezogen auf die Polyolmischung b), eingesetzt.

6.)   Als Aktivatoren werden einbaufähige, vorzugsweise hydroxylgruppenhaltige, tert, Amine, z.B. N,N,N'-Trimethyl-N'-hydroxyethyl-ethylendiamin, eingesetzt. Bevorzugt ist Dimethylethanolamin in Mengen von 0,4-1,0 Gew.-%, bezogen auf die Polyolmischung b).

Als Polyisocyanat-Komponente wird ein Roh-MDI-Typ mit einem 2-Kern-Gehalt von 70-90 Gew.-% (wobei 12-30 Gew.-%, vorzugsweise 15-25 Gew.-%, 2,4'-Diphenylmethandiisocyanat darstellen) und einem höherkernigen Anteil von 10-30 Gew.-%, wobei vorzugsweise die Fraktion mit mehr als 4 Kernen nur mit maximal 3 Gew.-% enthalten ist, verwendet.

Bevorzugt ist hierbei ein MDI-Typ mit folgendem 2-Kern-Gehalt:

| | |
|---|---|
| 2-Kern-Gehalt: | 74 Gew.-% |
| | 52 Gew.-% Diphenylmethan-4,4'-diisocyanat |
| | 19 Gew.-% Diphenylmethan-2,4'-diisocyanat |
| | 3 Gew.-% Diphenylmethan-2,2'-diisocyanat |
| 3- + 4-Kern Gehalt: | 23 Gew.-% |
| höherkerniger Rest: | 3 Gew.-% |
| | 100 Gew.-% |

Erfindungsgemäß können natürlich auch gegebenenfalls Hilfs- und Zusatzmittel mitverwendet werden wie

a)   leicht flüchtige organische Substanzen als weitere Treibmittel,

b)   andere Reaktionsbeschleuniger und Reaktionsverzögerer der an sich bekannten Art in den an sich üblichen Mengen,

c)   oberflächenaktive Zusatzstoffe, wie Emulgatoren und Schaumstabilisatoren, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögeren, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Der erfindungsgemäße Schaumstoff wird durch Vermischen der Polyolformulierung mit der Polyisocyanat-Komponente in der Regel in den Gew.-Verhältnissen 100:170-200, bevorzugt 100:180, hergestellt. Üblicherweise erfolgt diese Vermischung mittels einer Niederdruck-Schäummaschine, z.B. einer Cannon C 300. Die Blockherstellung erfolgt diskontinuierlich, indem das schäumfähige Gemisch in eine entsprechend große Kiste, deren Grundfläche von der späteren Größe des Autohimmels bestimmt ist, gegossen wird. Die Schaumstoffe haben eine Rohdichte von 25-30 kg/m³, bevorzugt ca. 28 kg/m³, so daß zur Herstellung eines Schaumblockes in den Maßen 180 x 140 x 70 cm³ ca. 50 kg des obigen Gemisches benötigt werden. Das schaumfähige Gemisch ist dabei derart aktiviert, daß die Schaumbildung nach ca. 60 sec, gemessen ab Austritt der ersten Teilmenge aus dem Mischkopf, beginnt (Startzeit). Nach ca. 200 sec bindet der Schaumstoff ab und nach ca. 260 sec erfolgt der Abblasvorgang, d.h. ein plötzliches Abdampfen eines Gemisches aus Wasserdampf und $CO_2$, wobei auf der Blockoberfläche eine Vielzahl kleiner Krater gebildet werden. Dieser Abblasvorgang ist das äußere Zeichen dafür, daß sich die Schaumzellen geöffnet haben.

Der erfindungsgemäße Schaumstoff ist offenzellig (75-94 Vol-%, ASTM-D-1940-42T), bei Raumtemperatur dehn- und verformbar, so daß auch kompliziert geformte Autohimmel und Hutablagen damit gefertigt werden können. Er hat eine Glasübergangstemperatur von ca. 150°C und damit eine hohe Wärmeformbeständigkeit. Er ist genügend biegesteif, so daß die noch warmen Formteile ohne Beschädigung aus dem 130-140°C heißen Werkzeug gerissen werden können. Er besitzt zudem fast kein Rückstellvermögen, so daß unterschiedlich eng zusammengepreßte Kanten in ihrem Querschnitt erhalten bleiben und damit die notwendige Paßgenauigkeit der Teile beim Einbau ermöglichen.

Einzelheiten des Rezepturaufbaus, der Verarbeitung sowohl zum Schaumstoff als auch zu Autohimmeln sowie zu den physikalischen Eigenschaften des Schaumstoffs werden in den folgenden Beispielen mitgeteilt.

## Beispiel 1

### A) Rezeptur

| | |
|---|---|
| 33,3 Gew.-Tle. | eines auf Trimethylolpropan-gestarteten Propylenoxid/Ethylenoxid-Polyethers, OH-Zahl 28 |
| 29,0 Gew.-Tle. | eines auf Trimethylolpropan-gestarteten Propylenoxid-Polyethers, OH-Zahl 550 |
| 25,0 Gew.-Tle. | eines Phthalsäure-Diethylenglykol-Ethylenglykol-Polyesters der OH-Zahl 290 |
| 6,0 Gew.-Tle. | Glyzerin, OH-Zahl 1825 |
| 4,6 Gew.-Tle. | Wasser, rechnerische OH-Zahl 6222 |
| 0,5 Gew.-Tle. | Dimethylethanolamin, OH-Zahl 630 |
| 1,6 Gew.-Tle. | Silicon-Schaumstabilisator Polyurax® SR 271 (BP Chemicals) |
| 100,0 Gew.-Tle. | obige Polyolkomponente, Misch-OH-Zahl 640 (einschließlich Wasser) |
| 180,0 Gew.-Tle. | eines Polyphenyl-polymethylenpolyisocyanates (Roh-MDI) mit einem 2-Kern-Gehalt von ca. 74 % und einem Diphenylmethan-2,4'-diisocyanat-Isomerenanteil von ca. 19 %, einem NCO-Gehalt von 31,5 % und einer Viskosität bei 25° C von ca. 40 mPa.s. Bei der stöchiometrischen Einbeziehung des gesamten Wasseranteils beträgt die Kennzahl 120. |

### B) Herstellung und Eigenschaften des kaltverformbaren Polyurethan-Hartschaumstoffes

Jeweils ca. 150 kg der obigen Polyolkomponente und der obigen MDI-Komponente werden in die dafür vorgesehenen Behälter einer Cannon C 300-Niederdruck-Schäummaschine gefüllt (Materialtemperatur 25°C).

Die Dosierung wird entsprechend dem vorgegebenen Verhältnis von Polyol/MDI = 100/180 auf eine Austragsleistung von 49200 g pro Minute Polyol und 88560 g pro Minute MDI eingestellt. Die Befüllung einer Kiste (Länge x Breite x Höhe: 170 x 130 x 100 cm²] mit der gut gemischten Mischung aus Polyol und MDI erfolgt für genau 21 sec, so daß 17220 g des obigen Polyols und 30996 g des obigen MDI eingetragen werden. Etwa 66 sec nach Beginn des Einfüllvorganges beginnt die Mischung zu schäumen (Startzeit), nach 190 sec bindet der Schaum ab (Abbindezeit) und nach ca. 220 bläst der Schaum stark ab (Abblaszeit), so daß, über die Schaumoberfläche verteilt, zahlreiche kleine Krater entstehen. Der Schaumblock hat eine Höhe von ca. 60 cm erreicht, seine Rohdichte beträgt ca. 27 g/l. Nach 20 Minuten wird der Schaumblock entformt, für ca. 2 Tage zwecks Auskühlung gelagert und danach besäumt und in 1 cm starke Platten aufgeschnitten.

Der Schaumstoff hat folgende Eigenschaften:

```
Offenzelligkeit (gemessen in Anlehnung an
ASTM-D 1940-42T)              90 Vol.-%


Druckversuch (DIN 53421)
          0,19 MPa (parallel zur Schäumrichtung)
          0,11 MPa (senkrecht zur Schäumrichtung)


Dreipunktbiegeversuch (DIN 53423)
     Randfaserdehnung               24 %
     Biegefestigkeit bei Bruch        0,20 MPa


Zugversuch (DIN 53430)
     Reißdehnung                     24 %
     Reißfestigkeit                0,26 MPa
     Zugfestigkeit                 0,26 MPa


Glasübergangstemperatur
Tg (DIN 53445-86)                155° C
```

An diesen mechanischen Werten erkennt man, daß dieser Hartschaum zugleich biegbar und elastisch ist. Nach einer Verformung im kalten Werkzeug stellen sich die zusammengepreßten Schaumbereiche auch bei einer Wärmealterung bei 110°C nur unwesentlich zurück, so daß der Abdruck konturstabil bleibt.

C) Verarbeitung zu Autohimmel

Die 1 cm starke Polyurethan-Hartschaumstoffplatte wird Sandwich-artig von zwei Glasvliesen umhüllt. Auf die Glasvliese wurde zuvor ein lösungsmittelfreier Polyurethan-2-Komponenten-Klebstoff, ca. 120 g pro m², gesprüht. Danach werden die Glasvliese zum einen mit einer Dekorfolie, Rückseite zum Glasvlies, und zum anderen mit einem Textilgewebe abgedeckt. Dieser locker zusammenliegende Aufbau von 5 Schichten, wenn man den Klebstoff unberücksichtigt läßt, wird in ein auf ca. 130°C beheiztes Werkzeug gelegt. In dem Moment, wo das Werkzeug zufährt, wird der Schaumkern, der nicht wärmer als Raumtemperatur ist, verformt. Die Formstandzeit beträgt 1 Minute. Während dieser Zeit härtet die Wärme des Werkzeugs den Klebstoff aus. Der fertige Autohimmel wird dem Werkzeug entnommen. Er muß noch gestanzt werden und ist danach einbaufertig.

Ein solcher Autohimmel besitzt eine Wärmeformbeständigkeit von 130°C (Prüftemperatur). Auf der Oberfläche der nur wenig zusammengepreßten Himmelbereiche ist keine Unruhe wahrnehmbar.

Beispiel 2

28,00 Gew.-Tle. eines auf Trimethylolpropan gestarteten
Propylenoxid-Polyethers, OH-Zahl 550

21,00 Gew.-Tle. eines auf Trimethylolpropan-gestarteten
Propylenoxid/Ethylenoxid (78 %/22 %)-
Polyethers, OH-Zahl 28

15,77 Gew.-Tle. eines auf 1,2-Propylenglykol-gestarteten
Ethylenoxid-Polyethers, OH-Zahl 180

25,00 Gew.-Tle. eines Phthalsäure-Diethylenglykol-
Ethylenglykol-Polyesters, OH-Zahl 290

4,55 Gew.-Tle. Glyzerin, OH-Zahl 1825

4,55 Gew.-Tle. Wasser, rechnerische OH-Zahl 6222


0,50 Gew.-Tle. Dimethylethanolamin, OH-Zahl 630

0,63 Gew.-Tle. Polyurax® SR 234 (BP Chemicals)
-----------------------------------------------------------------
100,0 Gew.-Tle. obige Polyolkomponente, Misch-OH-Zahl
einschließlich Wasser 630

180,0 Gew.-Tle. eines Polyphenyl-polymethylenpolyisocyanats (Roh-MDI) mit einem 2-Kern-Gehalt von ca. 74 % und einem Diphenyl-
methan-2,4'-diisocyanat von ca. 19 %,
einem NCO-Gehalt von 31,5 % und einer
Viskosität bei 25° C von ca. 40 mPa.s.


Die Kennzahl der Rezeptur beträgt unter vollständiger Einbeziehung des Wassers 118.

B) Herstellung und Eigenschaften des kaltverformbaren Polyurethan-Schaumstoffes

Die Herstellung entspricht der in Beispiel 1 B gegebenen Beschreibung, wobei für die Reaktionszeiten folgendes ermittelt wurde:

Startzeit: ca. 58 sec
Abbindezeit: ca. 206 sec
Abblaszeit: ca. 250 sec
Rohdichte (DIN 53420) ca. 28 kg/m³
Offenzelligkeit
(ASTM-D 1940-42T) ca. 92 Vol.-%
Druckversuch (DIN 53421) 0,18 MPa (parallel zur Schäumrichtung)
0,11 MPa (senkrecht zur Schäumrichtung)
Dreipunktbiegeversuch (DIN 53423)
Randfaserdehnung 23,8 %
Biegefestigkeit bei Bruch 0,21 MPa

6

Zugversuch (DIN 53430)
Reißdehnung          25 %
Reißfestigkeit       0,29 MPa
Zugfestigkeit        0,29 MPa
Glasübergangstemperatur Tg
(DIN 53445-86)       150° C

Beispiel 3

A) Rezeptur

29,0 Gew.-Tle.   eines auf Trimethylolpropan gestarteten
                 Propylenoxid/Ethylenoxid-Polyethers, in
                 dem 20 Gew.-% Copolymerisat aus Styrol
                 und Acrylnitril dispergiert sind, OH-
                 Zahl 28

25,0 Gew.-Tle.   eines auf Trimethylolpropan gestarteten
                 Propylenoxid-Polyethers, OH-Zahl 550

25,0 Gew.-Tle.   eines Phthalsäure-Diethylenglykol-
                 Ethylenglykol-Polyesters der OH-Zahl
                 290

8,3 Gew.-Tle.    eines auf 1,2-Propylenglykol gestarteten
                 Ethylenoxid-Polyethers, OH-Zahl 180

6,0 Gew.-Tle.    Glyzerin, OH-Zahl 1825

4,6 Gew.-Tle.    Wasser, rechnerische OH-Zahl 6222

0,5 Gew.-Tle.    Dimethylethanolamin, OH-Zahl 630

1,6 Gew.-Tle.    Silicon-Schaumstabilisator Polyurax® SR
                 271 (BP Chemicals)

--------------------------------------------------------

100,0 Gew.-Tle.  obiger Polyolkomponente, Misch-OH-Zahl
                 630 (einschließlich Wasser) und

180,0 Gew.-Tle.  eines Polyphenyl-polymethylen-polyiso-
                 cyanats (Roh-MDI) mit einem 2-Kern-Gehalt von ca. 74 % und einem Diphenyl-
                 methan-2,4'-diisocyanat von ca. 19 %,
                 einem NCO-Gehalt von 31,5 % und einer
                 Viskosität bei 25° C von ca. 40 mPa.s.

werden umgesetzt.

7

Bei der stöchiometrischen Einbeziehung des gesamten Wasseranteils beträgt die Kennzahl 120.

B) Herstellung und Eigenschaften des kaltverformbaren Polyurethan-Schaumstoffes

Die Herstellung entspricht der in Beispiel 1 B gegebenen Beschreibung, wobei für die Reaktionszeiten folgendes ermittelt wurde:

Startzeit:          ca. 55 sec
Abbindezeit:        ca. 170 sec
Abblaszeit:         ca. 220 sec
Rohdichte (DIN 53420)       ca. 28 kg/m³
Offenzelligkeit
(ASTM-D 1940-42T)           ca. 88 Vol.-%
Druckversuch (DIN 53423)    0,20 MPa (parallel zur Schäumrichtung)
                            0,12 MPa (senkrecht zur Schäumrichtung)
Dreipunktbiegeversuch (DIN 53423)
Randfaserdehnung            23 %
Biegefestigkeit bei Bruch   0,23 MPa
Zugversuch (DIN 53430)
Reißdehnung        20,2 %
Reißfestigkeit     0,28 MPa
Zugfestigkeit      0,28 MPa
Glasübergangstemperatur Tg
(DIN 53445-86)     150° C

Dieser Schaumstoff ist kalt verformbar und prägbar und läßt sich nach der in Beispiel 1c) gegebenen Beschreibung zu Autohimmel verarbeiten.

## Patentansprüche

1. Verfahren zur Herstellung von offenzelligen, kaltverformbaren Polyurethan-Hartschaumstoffen durch Umsetzung von

    a)      Polyisocyanaten mit

    b)      einer Polyol-Komponente aus Verbindungen mit mindestens zwei Hydroxylgruppen vom Molekulargewicht 187-10.000, Kettenverlängerungs- und Vernetzungsmitteln mit mindestens zwei Hydroxylgruppen vom Molekulargewicht 32 - 186, Wasser als Treibmittel, tert.-Aminkatalysatoren und gegebenenfalls Silicon-Schaumstabilisatoren,

    dadurch gekennzeichnet, daß

    - als Komponente a) ein Gemisch aus Diphenylmethandiisocyanaten und Polyphenylpolymethylenpolyisocyanaten, bestehend aus

    1.)      70-90 Gew.-% Diphenylmethan-diisocyanaten, wovon
             12-30 Gew.-%, 2,4'-Diphenylmethandiisocyanat darstellen, und
    2.)      10-30 Gew.-% Polyphenyl-polymethylenpolyisocyanaten
        und

    - als Komponente b) eine Mischung aus

    1.)      50-70 Gew.-% an di- und trifunktionellen, Hydroxylgruppen aufweisenden Polyethern einer OH-Zahl von 28-600, und
    2.)      20-35 Gew.-% eines difunktionellen, Hydroxylgruppen aufweisenden Phthalsäurepolyesters einer OH-Zahl von 150-440,
    3.)      2-10 Gew.-% Glyzerin,
    4.)      3,5-7 Gew.-% Wasser,
    5.)      0,3-1 Gew.-% eines einbaufähigen tert.-Amin-Katalysators und gegebenenfalls
    6.)      0,1-2 Gew.-% eines Silikon-Schaumstabilisators

    verwendet werden und die Polyolkomponente b) mit der Isocyanatkomponente a) im Gew.-Verhältnis 100:170-200 vermischt und umgesetzt wird.

2. Verwendung der offenzelligen, kaltverformbaren Hartschaumstoffe gemäß Anspruch 1 zur Herstellung von Autohimmeln.

**Claims**

1. A process for the production of open-cell, cold-formable rigid polyurethane foams by reaction of
   a)      polyisocyanates with a
   b)      polyol componentof compounds containing at least two hydroxyl groups and having a molecular weight of 187 to 10,000, chain-extending agents and crosslinking agents containing at least two hydroxyl groups and having a molecular weight of 32 to 186, water as blowing agent, tertiary amine catalysts and silicone foam stabilizers,
   characterized in that
   - component a) is a mixture of diphenyl methane diisocyanates and polyphenyl polymethylene polyisocyanates consisting of
   1.)      70 to 90% by weight diphenyl methane diisocyanates, of which
   2.)      12 to 30% by weight is 2,4'-diphenyl methane diisocyanate, and
   3.)      10 to 30% by weight polyphenyl polymethylene polyisocyanates
     and
   - component b) is a mixture of
   1.)      50 to 70% by weight difunctional and/or trifunctional hydroxyl polyethers having an OH value of 28 to 600, and
   2.)      20 to 35% by weight of a difunctional phthalic acid hydroxyl polyester having an OH value of 150 to 440,
   3.)      2 to 10% by weight glycerol,
   4.)      3.5 to 7% by weight water,
   5.)      0.3 to 1% by weight of an incorporable tertiary amine catalyst and optionally
   6.)      0.1 to 2% by weight of silicone foam stabilizer and the polyol component b) is mixed and reacted with the isocyanate component a) in a ratio by weight of 100:170-200.

2. The use of the open-cell, cold-formable rigid foams claimed in claim 1 for the production of car roofs.

**Revendications**

1. Procédé pour la préparation de mousses rigides de polyuréthannes à cellules ouvertes, moulables à froid, par réaction de:
   a)      des polyisocyanates avec
   b)      un composant polyol consistant en composés à au moins deux groupes hydroxy de poids moléculaire 187 à 10 000, des agents d'allongement des chaînes et agents réticulants à au moins deux groupes hydroxy de poids moléculaire 32 à 186, l'eau servant d'agent porogène, des catalyseurs consistant en amines tertiaires et le cas échéant des silicones stabilisants des mousses,
   caractérisé en ce que:
   - on utilise en tant que composant a) un mélange de diphénylméthane-diisocyanates et de polyphényl-polyméthylène-polyisocyanates consistant en:
     1) 70 à 90 % en poids de diphénylméthane-diisocyanates dont 12 à 30 % en poids de 2,4'-diphénylméthane-diisocyanates, et
     2) 10 à 30 % en poids de polyphényl-polyméthylène-polyisocyanates, et
   - en tant que composant b) un mélange de:
     1) 50 à 70 % en poids de polyéthers di- et tri-fonctionnels contenant des groupes hydroxy, d'indice d'OH 28 à 600, et
     2) 20 à 35 % en poids d'un polyester phtalique difonctionnel contenant des groupes hydroxy, d'indice d'OH 150 à 440,
     3) 2 à 10 % en poids de glycérol,
     4) 3,5 à 7 % en poids d'eau,
     5) 0,3 à 1 % en poids d'un catalyseur consistant en une amine tertiaire chimiquement combinable et, le cas échéant,
     6) 0,1 à 2 % en poids d'un silicone stabilisant des mousses, et en ce que l'on mélange et on fait réagir le composant polyol b) avec le composant isocyanate a) dans des proportions relatives en poids de 100:170 à 200.

2. Utilisation des mousses rigides à cellules ouvertes, moulables à froid, selon la revendication 1, pour la fabrication d'habillages de plafonds d'automobiles.